(19) **Europäisches Patentamt / European Patent Office / Office européen des brevets**

(11) **EP 1 930 388 A1**

(12) # EUROPEAN PATENT APPLICATION

published in accordance with Art. 153(4) EPC

(43) Date of publication:
**11.06.2008 Bulletin 2008/24**

(21) Application number: **06796642.4**

(22) Date of filing: **22.08.2006**

(51) Int Cl.:
*C09K 3/00* (2006.01)     *C08F 2/22* (2006.01)
*C08F 265/06* (2006.01)   *F16F 15/02* (2006.01)

(86) International application number:
**PCT/JP2006/316428**

(87) International publication number:
**WO 2007/023819 (01.03.2007 Gazette 2007/09)**

(84) Designated Contracting States:
**DE GB**

(30) Priority: **22.08.2005 JP 2005240487**

(71) Applicant: **Nippon Shokubai Co.,Ltd.**
**Osaka-shi, Osaka 541-0043 (JP)**

(72) Inventors:
• **MIYAWAKI, Yukihiro**
  **Kobe-shi, Hyogo 651-1301 (JP)**

• **NAGAISHI, Dai**
  **Suita-shi, Osaka 564-0035 (JP)**

(74) Representative: **Brehm, Hans-Peter et al**
**Patent- und Rechtsanwälte**
**Hansmann & Vogeser**
**Albert-Rosshaupter-Strasse 65**
**81369 München (DE)**

(54) **EMULSION FOR VIBRATION DAMPER**

(57)   To provide an emulsion for vibration damping materials: excellent in vibration damping property in a wide temperature range, thermal drying property, and film-forming property at low temperatures; and sufficiently suppressing sagging of a vibration damping coating film on the vertical surface; and therefore useful for vibration damping materials of various structures. An emulsion for vibration damping materials, comprising a particle having: a core part formed from an acrylic copolymer (A) ; and a shell part formed from an acrylic copolymer (B), wherein at least one of the acrylic copolymer (A) and the particle having the core part and the shell part has a weight average molecular weight of 20000 to 250000.

**EP 1 930 388 A1**

**Description**

TECHNICAL FIELD

The present invention relates to an emulsion for vibration damping materials. More preferably, the present invention relates to an emulsion for vibration damping materials useful as a raw material of vibration damping materials used to prevent vibration and noise of various structures, thereby to insure sustained quietude.

BACKGROUND ART

Vibration damping materials are used to prevent vibration and noise of various structures to insure sustained quietude and have been widely used beneath cabin floors of road vehicles and also applied to rolling stock, ships, aircraft, electric machines, buildings, and construction machines, among other uses. Molded products such as plate products and sheet products produced by using materials having vibration absorbing performance and sound absorbing performance have been conventionally used as raw materials used for such vibration damping materials. However, it is difficult for such molded products to be used at vibration or noise-generation positions having complicated shapes. Therefore, various methods for improving the workability and thereby sufficiently exhibiting the vibration damping property have been investigated. That is, an inorganic powder-containing asphalt sheet has been installed under automotive cabin flooring, for instance, but since the sheet must be secured in position by thermal fusion, improvements in workability and the like are needed and studies are underway on various compositions for vibration damping materials and polymers for the formation of vibration damping materials, for example.

Coating type vibration damping materials (coating materials) have been developed as an alternative material for such molded products. For example, the following vibration damping coating materials have been variously proposed: vibration damping coating materials are sprayed onto positions to be subjected to damping treatment with a spray or applied thereto by any methods, and thus-formed coating film can provide vibration absorbing effect and sound absorbing effect. Specifically, not only aqueous vibration damping coating materials in which synthetic resin powders are blended with vehicles such as asphalt, rubber, and synthetic resin and thereby the hardness of the obtained coating film is improved, but also as materials suitably used for interior parts of cars, vibration coating materials in which activated carbon as a filler is dispersed into a resin emulsion, have been developed. However, even these conventional products do not provide sufficiently satisfactory vibration damping performances. Techniques for further sufficiently exhibiting the vibration damping performances have been desired.

With respect to conventional coating type vibration damping materials, disclosed is an aqueous vibration damping composition prepared by adding a compatibilizing agent to a mixture of aqueous dispersions of two or more kinds of polymers having different glass transition temperatures at a specific ratio (for example, referring to Japanese Kokai Publication No. 2001-152028 (page 2)). In this composition, the mixture of aqueous dispersions of incompatible polymers is used, and the compatibilizing agent is added to cover the incompatibility, and thereby the temperature peak of the vibration damping property can be broad. However, in such a composition, the compatibilizing agent may remain in the vibration damping coating film. Therefore, such a composition has room for improvement in order to sufficiently exhibit the vibration damping performances.

With respect to an emulsion for vibration damping materials containing particles having a core part formed from an acrylic copolymer and a shell part formed from an acrylic copolymer, disclosed is a technique for adjusting glass transition temperatures of these acrylic copolymers (for example, referring to Japanese Kokai Publication No. 2005-105133 (page 2)). Such an emulsion for vibration damping materials shows excellent vibration damping property in a wide temperature range. Therefore, such a technique is industrially very useful. However, such a technique has room for improvement in order that such an emulsion exhibits more excellent vibration damping performances and thereby is more preferably used as vibration damping materials of various structures.

Further, an aqueous vibration damping composition prepared by using an aqueous resin dispersant of an acrylic copolymer as a vehicle and mixing an inorganic filler such as calcium carbonate and talc with the dispersant is known. This composition has a pigment volume concentration (PVC) of 45 to 60% by volume and contains the inorganic filler at a high proportion. However, the proportion of the resin contents is small in the formulation. Therefore, the composition has insufficient film-forming property particularly after coating at low temperatures, and thereby cracks and the like may be generated on the coating film surface. Therefore, this composition has room for improvement to be preferably used as a raw material of vibration damping materials by improving this respect.

SUMMARY OF THE INVENTION

The present invention has been made in view of the above-mentioned state of the art. The present invention has an object to provide an emulsion for vibration damping materials : excellent in vibration damping property in a wide temperature range, thermal drying property, and film-forming property at low temperatures; and sufficiently suppressing sagging of a vibration damping coating film on the vertical surface; and therefore useful for vibration damping materials of various structures.

The present inventors have made various investigations about emulsions for vibration damping materials. The inventors noted that if an emulsion for vibration damping materials contains a particle having a core part formed from an acrylic copolymer and a shell part formed from an acrylic copolymer, such an emulsion for vibration damping materials can exhibit excellent vibration damping property in a wide temperature range, as compared with emulsions prepared by using an acrylic copolymer singly or using two or more species of acrylic copolymers in combination. The inventors found that if the weight average molecular weight of the acrylic copolymer constituting the core part and/or the whole particle having the core part and the shell part is adjusted, the compatibility area between the core part and the shell part significantly increases, and thereby the core part and the shell part are sufficiently compatible with each other without use of compatibilization agents, and also found that such an emulsion is more excellent in vibration damping property in a wide temperature range due to the compatibility. The inventors also found that vibration damping coating films formed from such an emulsion for vibration damping materials can exhibit excellent thermal drying property and thereby cracks or expansion on the coating film surface and sagging of the coating film on the vertical surface can be suppressed, and further such a vibration damping coating film is also excellent in film-forming property after coated at low temperatures. And the inventors found that such coating films can exhibit sufficient function as vibration damping materials. Thereby, the above-mentioned problems have been admirably solved, and therefore the present invention has been completed.

The emulsion for vibration damping materials of the present invention can be particularlypreferablyused for aqueous coating type vibration damping materials.

That is, the present invention is an emulsion for vibration damping materials, comprising a particle having: a core part formed from an acrylic copolymer (A); and a shell part formed from an acrylic copolymer (B), wherein one of the acrylic copolymer (A) and the particle having the core part and the shell part has a weight average molecular weight of 20000 to 250000.

The present invention is also a production method of the emulsion for vibration damping materials, wherein an emulsion polymerization step using monomer components having different glass transition temperatures is performed in multiple stages.

DETAILED DESCRIPTION OF THE INVENTION

The present invention is described in more detail below.

The emulsion for vibration damping materials of the present invention contains particles having a core part and a shell part (hereinafter, also referred to as "core-shell type particle") . Such particles generally exist in the form in which they are dispersed in a medium. That is, it is preferable that the emulsion for vibration damping materials has a medium and core-shell type particles dispersed in the medium. The medium is preferably an aqueous medium. Examples of such an aqueous medium include water and mixed solvents of water and a solvent capable of mixing with water. Among them, water is preferred in view of influence on environment or safety, which may be caused by use of a coating material containing the emulsion for vibration damping materials of the present invention is coated.

In the above-mentioned emulsion for vibration damping materials, the proportion of the core-shell type particles is 70% by weight or less, relative to 100% by weight of the total amount of the emulsion for vibration damping materials. If the proportion is more than 70% by weight, the viscosity of the emulsion for vibration damping materials becomes too high, and thereby, the emulsion may not maintain sufficient dispersion stability and then aggregate. The proportion is more preferably 60% by weight or less.

The above-mentioned core-shell type particle is a particle having a core part formed from an acrylic copolymer (A) and a shell part formed from an acrylic copolymer (B). Such a particle has a structure in which the acrylic copolymer (A) forming the core part and the acrylic copolymer (B) forming the shell part are combined. Representative examples of such a combined structure include a structure in which the acrylic copolymers (A) and (B) are completely compatible with each other (homogeneous structure), and a structure inhomogeneously formed, in which the acrylic copolymers (A) and (B) are not completely compatible with each other (core-shell combined structure and microdomain structure). It is preferable that the core-shell type particle has the latter core-shell combined structure in order that the properties of both the acrylic copolymers are sufficiently exhibited and a stable emulsion is prepared.

The above-mentioned core-shell combined structure has a form in which the surface of the core part is covered with the shell part. It is preferable that the surface of the core part is perfectly covered with the shell part, in this case. However, the surface of the core part may not be perfectly covered. For example, the core-shell combined structure may have a form in which the surface of the core part is covered in a mesh-like state or a form in which the core part is not covered in some places.

The average particle diameter of the above-mentioned core-shell type particle is not especially limited and preferably 10 nm to 1 μm. If the average particle diameter is less than 10 nm, the viscosity of the emulsion for vibration damping materials may become too high or the emulsion for vibration damping materials may not maintain sufficient dispersion stability and then aggregate. If the average particle diameter is more than 1 $\mu$m, such an emulsion is no longer an emulsion. The average particle diameter is more preferably 20 to 500 nm.

The average particle diameter can be measured by the following procedures, for example. The emulsion is diluted with distilled water and then sufficiently stirred and mixed. Then, about 10 mL of the mixture is charged into a glass cell and subjected to measurement using a dynamic light scattering photometer DLS-700 (product of OTSUKA ELECTRONICS CO., LTD.).

In the above-mentioned core-shell type particle, the "acrylic copolymer" means a copolymer prepared by using at least two kinds of monomer components, and at least one kind of the monomer components is a monomer having an unsaturated double bond and a -COO group (hereinafter, also referred to as "(meth)acrylic acid (salt) monomer"). That is, the "acrylic copolymer" means a copolymer prepared by using at least two kinds of monomer components, wherein at least one kind of the monomer components is a monomer represented by $C(R^1)_2$=CH-COOR$^2$, or $C(R^3)_2$=C$(CH_3)$-COOR$^4$ ($R^1$, $R^2$, $R^3$, and $R^4$ being the same or different and each representing a hydrogen atom, a metal atom, an ammonium group, an organic amine group, or a straight, branched, or cyclic alkyl group.).

In the present invention, two kinds of acrylic copolymers, that is, the acrylic copolymer (A) and the acrylic copolymer (B) different from the acrylic copolymer (A) are used. These copolymers are different in any of various properties such as weight average molecular weight, glass transition temperature, SP value (solubility coefficient), kind of monomer to be used, and proportion of the monomer. Among them, it is preferable that the copolymer (A) and (B) are different in at least one of the weight average molecular weight, the glass transition temperature and the SP value, as mentioned below.

It is preferable in the present invention that one of the acrylic copolymer (A) and the particle having the core part and the shell part has a weight average molecular weight of 20000 to 250000. It is more preferable that both of the acrylic copolymer (A) and the particle having the core part and the shell part have a weight average molecular weight of 20000 to 250000. Thereby, the emulsion can more sufficiently exhibit the functional effects of the present invention.

The above-mentioned acrylic copolymer (A) constituting the core part preferably has a weight average molecular weight of 20000 to 250000. If the weight average molecular weight is less than 20000, the vibration damping property is insufficient, and the obtained emulsion for vibration damping materials can not exhibit excellent stability when mixed in coating materials. If the weight average molecular weight is more than 250000, the acrylic copolymer (A) is insufficient in compatibility with the acrylic copolymer (B) constituting the shell part, thereby failing to maintain the balance of vibration damping property and to improve the vibration damping property particularly in a range of 30 to 40°C. Also, such an emulsion may be insufficient in film-forming property at low temperatures when mixed in coating materials. The weight average molecular weight is more preferably 30000 to 220000, and still more preferably 40000 to 200000.

It is also preferable that a difference in weight average molecular weight between the above-mentioned acrylic copolymer (A) and the acrylic copolymer (B) constituting the shell part is 4000 or more. That is, it is preferable that the weight average molecular weight of the above-mentioned acrylic copolymer (A) is larger or smaller than the weight average molecular weight of the acrylic copolymer (B) by 4000 or more. Such difference in weight average molecular weight makes it possible for the emulsion to exhibit high vibration damping property in a wide temperature range. The difference in weight average molecular weight is more preferably 10000 or more and 200000 or less.

The above-mentioned weight average molecular weight of the core-shell type particle, that is, the weight average molecular weight of the whole particle in which the core part and the shell part are combined with each other is 20000 to 250000. If the weight average molecular weight is less than 20000, the vibration damping property is insufficient, and the obtained emulsion for vibration damping materials can not exhibit excellent stability when mixed with coating materials. If the weight average molecular weight is more than 250000, the compatibility between the acrylic copolymer (A) constituting the core part and the acrylic copolymer (B) constituting the shell part is insufficient, and thereby the emulsion fails to maintain the balance of vibration damping property and also fails to improve the vibration damping property particularly in a range of 30 to 40°C. Also, such an emulsion may be insufficient in film-forming property at low temperatures when mixed with coating materials. The weight average molecular weight is more preferably 30000 to 220000, and still more preferably 40000 to 200000, and most preferably 50000 to 170000.

The weight average molecular weight can be measured by GPC (gel permeation chromatography) under the following measurement conditions.

Measurement apparatus : HLC-8120GPC (tradename, product of TOSOH CORP.)

Molecular weight column: serially connected TSK-GEL, GMHXL-L, and TSK-GELG5000HXL (products of TOSOH CORP.)

Eluent: Tetrahydrofuran (THF)

Standard substance for calibration curve: Polystyrene (product of TOSOH CORP.)

Measurement method: A measurement object is dissolved in THF such that the solids are about 0.2% by weight, and the mixture is filtered and the obtained substance as a measurement sample is measured for molecular weight.

The above-mentioned glass transition temperature of the above-mentioned core-shell type particle, that is, the whole particle in which the core part and the shell part are combined with each other is preferably-2 to 20°C. If the glass transition temperature is less than -2°C, the vibration damping property at 60°C is not exhibited. If the glass transition temperature is more than 20°C, the vibration damping property at 20°C is not exhibited, and also the film-forming property may be reduced.

It is preferable that the above-mentioned acrylic copolymer (A) constituting the core part has a glass transition temperature (TgA) different from a glass transition temperature (TgB) of the above-mentioned acrylic copolymer (B). Such difference in glass transition temperature (Tg) makes it possible for the emulsion for vibration damping materials to exhibit higher vibration damping property in a wide temperature range. The difference between TgA and TgB is more preferably 15°C or more. Thereby, the vibration damping property can be efficiently exhibited particularly in a practical range of 20 to 60°C. If the difference is less than 15°C, the vibration damping property may be insufficiently exhibited at either 20°C or 60°C. The difference is still more preferably 20°C or more, and particularly preferably 25°C or more. The vibration damping property within the practical range may be insufficient if the difference is too large. Therefore, the difference between TgA and TgB is preferably 100°C or less, and more preferably 90°C or less, and still more preferably 80°C or less, and most preferably 50°C or less. It is particularly preferable that the TgA is higher than the TgB.

At least one of the glass transition temperature (TgA) of the above-mentioned acrylic copolymer (A) and the glass transition temperature (TgB) of the above-mentioned acrylic copolymer (B) is preferably 0°C or more. Thereby, a vibration damping coating film formed by using a coating material containing the emulsion for vibration damping materials of the present invention has more excellent drying property, and therefore expansion or cracks on the surface of the coating film can be more sufficiently suppressed. That is, a vibration damping material having dramatically excellent vibration damping property is formed. The glass transition temperature (TgA) of the acrylic copolymer (A) is more preferably 5°C or more. The glass transition temperature (TgA) of the acrylic copolymer (A) is preferably 5 to 40°C, and more preferably 10 to 30°C. The glass transition temperature (TgB) of the acrylic copolymer (B) is preferably 5 to 40°C, and more preferably 5 to 20°C.

As mentioned above, the preferable embodiments of the present invention include an embodiment in which one of the glass transition temperature (TgA) of the above-mentioned acrylic copolymer (A) and the glass transition temperature (TgB) of the above-mentioned acrylic copolymer (B) is 0°C or more and the difference between the TgA and the TgB is 15°C or more.

The Tg of the acrylic copolymers may be determined based on already acquired knowledge, and also may be controlled by the kind or proportion of the monomer component. However, the Tg can be calculated through the following calculation formula, theoretically.

[Equation 1]

$$\frac{1}{Tg'} = \left[ \frac{W_1'}{T_1} + \frac{W_2'}{T_2} + \cdot\cdot\cdot + \frac{W_n'}{T_n} \right]$$

in the formula, Tg representing Tg of the acrylic copolymer (absolute temperature);
$W_1$, $W_2$, and $\cdots$ $W_n$ each representing a mass fraction of each monomer to all the monomer component; and
$T_1$, $T_2$, and $\cdots$ $T_n$ each representing a glass transition temperature (absolute temperature) of a homopolymer prepared by each monomer component.

It is also preferable that the above-mentioned acrylic copolymer (A) constituting the core part has a SP value smaller than that of the above-mentioned acrylic copolymer (B). Such difference in SP value makes it possible for the vibration damping composition to exhibit higher vibration damping property in a wide temperature range. The difference in SP value between the above-mentionedacryliccopolymers (A) and (B) ismorepreferably 0.2 or more, and still more preferably 0.35 or more. Further, the difference is preferably 2.0 or less.

The SP values (δ) of the acrylic copolymers can be measured based on the following Small formula, for example.

[Equation 2]

$$\delta = \left[ (\Sigma \Delta e_1)(x) \diagup (\Sigma \Delta V_m)(x) \right]^{0.5}$$

in the formula,

δ representing a SP value of the acrylic copolymer;

$\Delta_{e1}$ representing a calculated value (kcal/mol) of evaporation energy of each monomer component constituting the acrylic copolymer;

$\Sigma\Delta_{e1}$ representing a total value of the calculated values of all the monomer components constituting the acrylic copolymers;

$\Delta V_m$ being a calculated value (ml/mol) of molecular volume of each monomer component constituting the acrylic copolymer;

$\Sigma\Delta V_m$ being a total value of the calculated values of all the monomer components constituting the acrylic copolymer; and

x being a molar distribution of each monomer component constituting the acrylic copolymer.

SP values of representative monomers, calculated from the above formula, are shown as follows.

Butyl acrylate: 9.77

2-ethylhexyl acrylate: 9.22

Methyl methacrylate: 9.93

Styrene: 8.6

Ethyl acrylate: 10.2

Methacrylic acid: 12.54

Methacrylonitrile: 12.7

Hydroxyethyl methacrylate: 13.47

Acrylic acid: 14.04

Acrylamide: 19.19

Methacrylamide: 16.25

Acrylonitrile: 14.39

Vinyl acetate: 10.56

It is preferable that a ratio by weight of the acrylic copolymer (A) to the acrylic copolymer (B) ((A)/(B))is 10 to 70/30 to 90. That is, in the above-mentioned core-shell type particle, the ratio by weight of the acrylic copolymer (A) to the acrylic copolymer (B) ( (A) / (B) ) ) is preferably 10 to 70/30 to 90, for example. The ratio is more preferably 30 to 60/40 to 60, and still more preferably 40 to 50/45 to 55. If the ratio of the acrylic copolymer (A) constituting the core part is smaller than the above-mentioned range, generation of blister (expansion of the coating film) after drying by heating may be insufficiently suppressed. In contrast, if the ratio of the acrylic copolymer (A) is larger than the above-mentioned range, generation of crack after heating by drying may be insufficiently suppressed. The ratio by weight is more preferably 30 to 60/40 to 70.

Then, the monomer components used for preparing the above-mentioned acrylic copolymers (A) and (B) are further explained. The same kind of monomers may be used as long as the acrylic copolymers (A) and (B) are different in the above-mentioned respects.

Each of the monomer components used for preparing the acrylic copolymer (A) and the acrylic copolymer (B) is not especially limited as long as at least one species of the monomer component is a (meth) acrylic acid (salt) monomer. One or two or more species of (meth) acrylic acid (salt) monomers and one or two or more species of other monomers may be used.

Examples of such (meth)acrylic acid (salt) monomers include acrylic acid, crotonic acid, citraconic acid, itaconic acid, maleic acid, maleic anhydride, fumaric acid, methyl acrylate, methyl methacrylate, ethyl acrylate, ethyl methacrylate, propyl acrylate, propyl methacrylate, isopropyl acrylate, isopropyl methacrylate, butyl acrylate, butyl methacrylate, isobutyl acrylate, isobutyl methacrylate, tert-butyl acrylate, tert-butyl methacrylate, pentyl acrylate, pentyl methacrylate, isoamyl acrylate, isoamyl methacrylate, hexyl acrylate, hexyl methacrylate, cyclohexyl acrylate, cyclohexyl methacrylate, octyl acrylate, octyl methacrylate, isooctylacrylate, isooctyl methacrylate, nonyl acrylate, nonyl methacrylate, isononyl acrylate, isononyl methacrylate, decyl acrylate, decyl methacrylate, dodecyl acrylate, dodecyl methacrylate, tridecyl acrylate, tridecyl methacrylate, hexadecyl acrylate, hexadecyl methacrylate, octadecyl acrylate, octadecyl methacrylate, 2-ethylhexyl acrylate, 2-ethylhexyl methacrylate, vinyl formate, vinyl acetate, vinyl propionate, 2-hydroxyethyl acrylate, 2-hydroxyethyl methacrylate, 2-hydroxypropyl acrylate, 2-hydroxypropyl methacrylate, divinyl benzene, diallyl phthalate, triallyl cyanurate, ethylene glycol diacrylate, ethylene glycol dimethacrylate, 1,4-butanediol diacrylate, 1,4-butanediol dimethacrylate, 1,6-hexanediol diacrylate, 1,6-hexanediol dimethacrylate, diethylene glycol diacrylate, diethylene glycol dimethacrylate, allyl acrylate, allyl methacrylate, and salts thereof or esterified products thereof. One or two or more species of them may be preferably used.

Examples of other monomers include styrene, α-methyl styrene, vinyltoluene, ethyl vinylbenzene, acrylonitrile, methacrylonitrile, acrylamide, methacrylamide, diacetone acrylamide, N-methylolacrylamide, and N-methylolmethacrylamide. One or two or more species of them may be used.

The above-mentioned salts are preferably metal salts, ammonium salts, organic amine salts, and the like. Examples of a metal atom forming the metal salts include monovalent metal atoms such as alkali metal atoms such as lithium, sodium, and potassium; divalent metal atoms such as alkaline earth metal atoms such as calcium and magnesium;

and trivalent metal atoms such as aluminum and iron. Preferred examples of the organic amine salts include alkanolamines such as ethanolamine, diethanolamine, and triethanolamine, and triethylamines.

In the monomer component used for preparing the above-mentioned acrylic copolymer (A), the proportion of the above-mentioned (meth)acrylic acid (salt) monomer is, for example, 10 to 70% by weight relative to 100% by weight of the total monomer component. The proportion is more preferably 30 to 60% by weight. In the monomer component used for preparing the above-mentioned acrylic copolymer (B), the proportion of the above-mentioned (meth)acrylic acid (salt) monomer is, for example, 30 to 90% by weight relative to 100% by weight of the total monomer component. The proportion is more preferably 40 to 70% by weight.

It is preferable that the above-mentioned monomer component contains a monomer having a polar functional group. That is, it is preferable that either the above-mentioned acrylic copolymer (A) or the above-mentioned acrylic copolymer (B) is prepared by copolymerizing the monomer component containing a monomer having a polar functional group. More preferably, each of the acrylic copolymer (A) and the acrylic polymer (B) is prepared by copolymerizing the monomer component containing a monomer having a polar functional group. Thus, the emulsion for vibration damping materials can further improve the vibration damping property or the stiffness if the core part and/or the shell part are/is formed by using the monomer having a polar functional group.

The functional group in the above-mentionedmonomer having the polar functional group is not especially limited. At least one of a carboxyl group, a hydroxyl group, a nitrile group, and an amide group is preferable among them. That is, the preferable embodiments of the present invention include an embodiment in which the polar functional group is at least one functional group selected from the group consisting of a carboxyl group, a hydroxyl group, a nitrile group, and an amide group.

Preferred examples of the above-mentioned monomer having the polar functional group include acrylic acid, hydroxyethyl acrylate, hydroxyethylmethacrylate, acrylamide, N-methyl acrylamide, N-butylmethacrylamide, N-methylolacrylamide, N-butylaminoethyl(meth)acrylate, N,N'-diethylaminoethyl(meth)acrylate, N,N'-dimethylaminoethyl(meth) acrylate, N,N'-diethylaminoethyl(meth)acrylate, and isobutoxy (meth)acrylate.

The proportion of the above-mentioned monomer having the polar functional group is preferably 0.5 to 10% by weight and more preferably 1.0 to 5.0% by weight relative to 100% by weight of the total monomer component.

If the above-mentioned (meth) acrylic acid (salt) monomer has a polar functional group, this proportion include the proportion of the (meth)acrylic acid (salt) monomer.

The pH of the emulsion for vibration damping materials of the present invention is not especially limited, and preferably 2 to 10, and more preferably 3 to 9, for example. The pH of the emulsion can be adjusted by adding ammonia water, water-soluble amines, alkali hydroxide aqueous solutions or the like, into the emulsion.

The viscosity of the above-mentioned emulsion for vibration damping materials is not especially limited. The viscosity is preferably 10 to 10000 mPa·s, and more preferably 50 to 5000 mPa·s. The viscosity can be measured under 25°C and 20 rpm conditions with a B type rotational viscometer.

A chain transfer agent is preferably used in the emulsion for vibration damping materials

Examples of the above-mentioned chain transfer agent include alkyl mercaptans such as hexyl mercaptan, octyl mercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; mercaptocarboxylic acid alkyl esters such as 2-ethylhexyl mercaptoacetate, 2-ethylhexyl mercaptopropionate, and tridecyl mercaptopropionate; mercaptocarboxylic acid alkoxyalkyl esters such as methoxybutyl mercaptoacetate and methoxybutyl mercaptopropionate; carboxylic acid mercaptoalkyl esters such as 2-mercaptoethyl octanoate; α-methylstyrene dimer, terpinolene, α-terpinene, γ-terpinene, dipentene, anisole, and allyl alcohol. One or two or more species of them may be used. Among them, it is preferable to use alkylmercaptans such as hexylmercaptan, octylmercaptan, n-dodecylmercaptan, t-dodecylmercaptan, n-hexadecylmercaptan, and n-tetradecylmercatan.

The emulsion for vibration dampingmaterials of the present invention is preferably produced by multistage polymerization using a usual emulsion polymerization method. The preferable embodiments of the present invention include an embodiment in which the above-mentioned emulsion for vibration damping materials is produced by multistage polymerization.

The present invention is also a production method of the above-mentioned emulsion for vibration damping materials, wherein the emulsion for vibration damping materials is produced by performing an emulsion polymerization step using monomer components having different glass transition temperatures in multiple stages.

In the above-mentioned production method of the emulsion for vibration damping materials, it is preferable that the emulsion for vibration damping materials is produced by performing an emulsion polymerization step using a monomer component constituting the core part formed from the acrylic copolymer (A) prior to a polymerization step using a monomer component constituting the shell part formed from the acrylic copolymer (B). For example, preferred is the production method of the above-mentioned emulsion for vibration damping materials, wherein an emulsion polymerization step using monomer components having different glass transition temperatures is performed in multiple stages, and an emulsion polymerization step in the first stage is a step of performing polymerization using the monomer component constituting the acrylic copolymer (A) and an emulsion polymerization step in the last stage is a step of performing polymerization using the monomer component constituting the acrylic copolymer (B).

As the above-mentioned production method, specifically, preferred is a method including the steps of (1) forming the core part formed from the acrylic copolymer (A) by emulsion polymerization of the monomer component in the aqueous medium, in the presence of a surfactant and/or a protective colloid, and (2) forming the shell part formed from the acrylic copolymer (B) by further emulsion polymerization of the monomer component into the emulsion containing the core part. Emulsions for vibration damping materials containing particles containing the core-shell combined structure can be preferably produced by such a production method. It is particularly preferable in the above-mentioned production method to adjust the compatibility of the acrylic copolymer (A) constituting the core part with the acrylic copolymer (B) constituting the shell part, the hydrophobic level (SP value) of these acrylic copolymers, the weight average molecular weight of these acrylic polymers, and the like. Thereby, ideal emulsions for vibration damping materials containing particles having core-shell structures of the present invention can be produced.

According to the above-mentioned production method in the preferable embodiment, for example, the core part formed from the acrylic copolymer (A) is formed in the emulsion polymerization step using the monomer component constituting the core part formed from the acrylic copolymer (A), and the shell part formed from the acrylic copolymer (B) is formed so as to be exposed to the core part in the emulsion polymerization step using the monomer component constituting the shell part formed from the acrylic copolymer (B). Thereby, the emulsion for vibration damping materials can be more efficiently obtained. If the emulsion polymerization step is performed in three or more stages, the following embodiment is preferable. The emulsion polymerization step using the monomer component constituting the core part formed from the acrylic copolymer (A) is performed as the first stage, and the emulsion polymerization step using the monomer component constituting the shell part formed from the acrylic copolymer (B) is performed as the last stage. And other steps, that is, the emulsion polymerization step between the first stage and the last stage is not especially limited as long as the emulsion polymerization step is performed in the above-mentioned order.

Herein, the above-mentioned "monomer components having different glass transition temperatures" means monomer components satisfying the condition that homopolymers prepared using such monomer components have different glass transition temperatures (absolute temperatures).

The aqueous medium and the monomer component in the above-mentioned production method are as mentioned above.

The surfactant in the above-mentioned production method may be a surfactant generally used in the emulsion polymerization, and is not especially limited. Examples of such a surfactant include anionic surfactants, nonionic surfactants, cationic surfactants, amphoteric surfactants, polymer surfactants, and reactive surfactants. One or two or more species of them is/are preferably used.

The above-mentioned anionic surfactant is not especially limited. Examples of the anionic surfactant include alkyl sulfate such as sodium dodecyl sulfate, potassium dodecylsulfate, and ammonium alkyl sulfate; sodium dodecyl polyglycol ether sulfate; sodium sulforicinoate; alkyl sulfonates such as sulfonated paraffin salt; alkyl sulfonates such as sodium dodecylbenzene sulfonate, and alkali metal sulfates of alkali phenol hydroxyethylene; higher alkyl naphthalene sulfonates; naphthalene sulfonic acid formalin condensate; fatty acid salts such as sodium laurate, triethanol amine oleate, and triethanol amine abietate; polyoxyalkyl ether sulfates; polyoxyethylene carboxylic acid ester sulfates; polyoxyethylene phenyl ether sulfates; succinic acid dialkyl esters sulfonate; and polyoxyethylene alkylaryl sulfates. One or two or more species of them may be used.

The above-mentioned nonionic surfactant is not especially limited. Examples of the nonionic surfactant include polyoxyethylene alkyl ethers; polyoxyethylene alkylaryl ethers; sorbitan aliphatic esters; polyoxyethylene sorbitan aliphatic esters; aliphatic monoglycerides such as monolaurate of glycerol; polyoxyethylene-oxypropylene copolymer; condensates of ethylene oxide and aliphatic amines, aliphatic amides, or aliphatic acids. One or two or more species of them may be used.

The above-mentioned cationic surfactant is not especially limited. Examples of the cationic surfactant include dialkyl dimethyl ammonium salts, ester type dialkyl ammonium salts, amide type dialkyl ammonium salts, and dialkylimidazolium salts. One or two or more species of them may be used.

The above-mentioned amphoteric surfactant is not especially limited. Examples of the amphoteric surfactant include alkyl dimethylamino acetic acid betaine, alkyl dimethyl amine oxide, alkyl carboxy methyl hydroxyethyl imidazolinium betaine, alkyl amide propyl betaine, and alkyl hydroxy sulfobetaine. One or two or more species of them may be used.

The above-mentioned polymer surfactant is not especially limited. Examples of the polymer surfactant include polyvinyl alcohols and modified products thereof; (meth)acrylic acid water-soluble polymers; hydroxyethyl (meth)acrylic acid water-soluble polymers; hydroxypopyl (meth)acrylic acid water-soluble polymers; and polyvinyl pyrrolidone. One or two or more species of them may be used.

Among the above-mentioned surfactants, non-nonylphenyl type surfactants are preferably used in view of environment.

The use amount of the above-mentioned surfactant may be appropriately determined depending on the kind of the surfactant to be used or the kind of the monomer component to be used. For example, the use amount of the surfactant is preferably 0.3 to 10 parts by weight, and more preferably 0.5 to 5 parts by weight, relative to 100 parts by weight of the total amount of the monomer component used for preparing the acrylic copolymer.

Examples of the above-mentioned protective colloid include polyvinyl alcohols such as partially saponificated polyvinyl alcohols, completely saponificated polyvinyl alcohols, and modified polyvinyl alcohols; cellulose derivatives such as hydroxyethyl cellulose, hydroxypropylcellulose, and carboxymethylcellulose salt; natural polysaccharides such as Guar gum. One or two or more species of them may be used. Such a protective colloid may be used singly or in combination with the surfactant.

The use amount of the above-mentioned protective colloid may be appropriately determined depending on the use conditions and the like. For example, the use amount of the protective colloid is preferably 5 parts by weight or less, and more preferably 3 parts by weight or less, relative to 100 parts by weight of the total amount of the monomer component used for preparing the acrylic copolymer.

A polymerization initiator is preferably used in order to initiate the emulsion polymerization in the above-mentioned production method. The polymerization initiator is not especially limited as long as it is a substance which is decomposed by heating and generates radical molecules. Water-soluble initiators are preferably used. Examples of such an initiator include persulfates such as potassium persulfate, ammonium persulfate, and sodium persulfate; water-soluble azo compounds such as 2,2'-azobis(2-amidinopropane)dihydrochloride, and 4,4'-azobis(4-cyanopentanoic acid); thermal decomposition initiators such as hydrogen peroxide; redox polymerization initiators such as hydrogen peroxide and ascorbic acid, t-butyl hydroperoxide and rongalite,potassium persulfate and metal salt, and ammonium persulfate and sodium hydrogensulfite. One or two or more species of them may be used.

The use amount of the above-mentioned polymerization initiator is not especially limited and may be appropriately determined depending on the kind of the polymerization initiator and the like. For example, the use amount of the polymerization initiator is preferably 0.1 to 2 parts by weight and more preferably 0.2 to 1 part by weight, relative to 100 parts by weight of the total amount of the monomer component used for preparing the acrylic copolymer.

A reducing agent may be used in combination with the above-mentioned polymerization initiator, if necessary, in order to accelerate the emulsion polymerization. Examples of the reducing agent include reducing organic compounds such as ascorbic acid, tartaric acid, citric acid, and grape sugar; and reducing inorganic compounds such as sodium thiosulfate, sodium sulfite, sodium bisulfite, and sodium metabisulfite. One or two or more species of them may be used.

The use amount of the above-mentioned reducing agent is not especially limited and preferably 0.05 to 1 part by weight, relative to 100 parts by weight of the total amount of the monomer component used for preparing the acrylic copolymer, for example.

It is also preferable in the above-mentioned production method to use a chain transfer agent if necessary at the time of the emulsion polymerization in order to adjust the average molecular weight of the above-mentioned acrylic copolymer (A) or (B). The chain transfer agent may be a generally used chain transfer agent and is not especially limited. Examples of the chain transfer agent include alkyl mercaptans such as hexyl mercaptan, octyl mercaptan, n-dodecyl mercaptan, t-dodecyl mercaptan, n-hexadecyl mercaptan, and n-tetradecyl mercaptan; halogenated hydrocarbons such as carbon tetrachloride, carbon tetrabromide, and ethylene bromide; mercaptocarboxylic acid alkyl esters such as 2-ethylhexyl mercaptoacetate, 2-ethylhexyl mercaptopropionate, and tridecyl mercaptopropionate; mercaptocarboxylic acid alkoxyalkyl esters such as methoxybutyl mercaptoacetate and methoxybutyl mercaptopropionate; carboxylic acid mercaptoalkyl esters such as 2-mercaptoethyl octanoate; α-methylstyrene dimer, terpinolene, α-terpinene, γ-terpinene, dipentene, anisole, and allyl alcohol. One or two or more species of themmay be used. Among them, it is preferable to use an alkylmercaptans such as hexylmercaptan, octylmercaptan, n-dodecylmercaptan, t-dodecylmercaptan, n-hexadecylmercaptan, and n-tetradecylmercatan.

The use amount of the above-mentioned chain transfer agent is not especially limited and preferably 2 parts by weight or less, and more preferably 1.0 part by weight or less, relative to 100 parts by weight of the total amount of the monomer component used for preparing the acrylic copolymer, for example.

Regarding the emulsion polymerization conditions in the above-mentioned production method, the polymerization temperature is not especially limited and preferably 0 to 100°C and more preferably 40 to 95°C, for example. The polymerization time is not especially limited, and preferably 1 to 15 hours, for example.

The addition mode of the monomer component, the polymerization initiator or the like is not especially limited. Any of en bloc addition, continuous addition, multistage addition and the like may be employed. These addition modes may be used in a suitable combination.

In the above-mentioned production method, the core part and the shell part are formed under the same operation, basically. The additives or the reaction conditions may be different, if necessary. For example, the surfactant and/or the protective colloid may not be added in the emulsion polymerization in the above-mentioned step (2).

It is preferable that nonvolatile contents in the emulsion for vibration damping materials obtained through the above-mentioned steps (1) and (2), that is, the proportion of the core-shell type particle is 70% by weight or less relative to 100% by weight of the total amount of the emulsion, as mentioned above. If the proportion is more than 70% by weight, the viscosity of the emulsion for vibration damping materials becomes too high, and thereby the emulsion may not maintain sufficient dispersion stability and then aggregate. The proportion is more preferably 60% by weight or less.

The emulsion for vibration damping materials of the present invention can be used after mixed (blended) with other emulsion resins. In this case, the same functional effects as in the present invention can be obtained. Preferred examples of other emulsion resins include acrylic resin, urethane resin, SBRresin, epoxy resin, vinyl acetate resin, vinyl acetate-acrylic resin, vinyl chloride resin, vinyl chloride-acrylic resin, vinyl chloride-ethylene resin, vinylidene chloride resin, styrene-butadiene resin, acrylonitrile-butadiene resin. One or two or more species of them may be used.

The use ratio of the above-mentioned other emulsion resins is preferably determined such that the ratio by weight of the emulsion for vibration damping materials of the present invention to the emulsion resin (the emulsion for vibration damping materials of the present invention/other emulsion resins) is 50 to 100/0 to 50.

The present invention is also a vibration damping composition comprising the emulsion for vibration damping materials.

The emulsion for vibration damping materials of the present invention can constitute a vibration damping composition, if necessary, together with other components. Such a vibration damping composition essentially containing the emulsion for vibration damping materials of the present invention is also one of the preferable embodiments of the present invention. Such a composition can form an aqueous vibration damping material capable of exhibiting excellent thermal drying property and vibration damping property. The preferable embodiments of the present invention also include a use method of the emulsion for vibration damping materials, wherein the vibration damping composition is used as an aqueous vibration damping material.

The above-mentioned vibration damping composition preferably contains 40 to 90% by weight of solids relative to 100% by weight of the total amount of the vibration damping composition, and more preferably 50 to 83% by weight, and still more preferably 60 to 80% by weight. The pH of the vibration damping composition is preferably 7 to 11, and more preferably 7 to 9.

The mix amount of the emulsion for vibration damping materials in the above-mentioned vibration damping composition is determined such that solids of the emulsion for vibration damping materials is 10 to 60% by weight relative to 100% by weight of the solids of the vibration damping composition. The proportion is more preferably 15 to 55% by weight.

Examples of the above-mentioned other components include solvent; aqueous cross-linking agent; plasticizer; stabilizer; thickener; wetting agent; antiseptic; foaming inhibitor; filler; coloring agent; dispersant; antirust pigment; antifoaming agent; antioxidant; mildewproofing agent; ultraviolet absorber; and antistatic agent. One or two or more species of them may be used. Among them, the vibration damping composition preferably contains a filler. The above-mentioned other components can be mixed with the above-mentioned emulsion for vibration damping materials and the like using, for example, a butterfly mixer, a planetary mixer, a spiral mixer, kneader, and a Dissolver.

The above-mentioned other components may be those generally used and are not especially limited. The following compounds and the like may be used, for example.

Examples of the above-mentioned solvent include ethylene glycol, butyl cellosolve, butyl carbitol, and butyl carbitol acetate. The mix amount of the solvent may be appropriately determined such that the solids concentration of the emulsion for vibration damping materials in the vibration damping composition is within the above-mentioned range.

Preferred examples of the above-mentioned aqueous cross-linking agent include oxazoline compounds such as EPOCROS WS-500, WS-700, K-2010, 2020, 2030 (tradename, products of NIPPON SHOKUBAI CO., LTD.); epoxy compounds such as ADEKA resin EMN-26-60, EM-101-50 (tradename, products of ADEKA Corp.); melamine compounds such as CYMEL C-325 (tradename, product of Mitsui Cytec Ind.); block isocyanate compounds; zinc oxide compounds such as AZO-50 (tradename, 50% by weight of zinc oxide aqueous dispersant, product of NIPPON SHOKUBAI CO., LTD.). The mix amount of the aqueous cross-linking agent is preferably 0.01 to 20 parts by weight of solids, relative to 100 parts by weigh of solids of the emulsion for vibration damping materials, for example. The mix amount is more preferably 0.15 to 15 parts by weight, and still more preferably 0.5 to 15 parts by weight. The aqueous cross-linking agent may be added into the emulsion for vibration damping materials or may be added together with other components added for forming the vibration damping composition.

If the cross-linking agent is mixed with the above-mentioned emulsion for vibration damping materials or the above-mentioned vibration damping composition, the toughness of the resin can be improved. Thereby, sufficiently high vibration damping property is exhibited in a high temperature range. Among them, oxazoline compounds are preferably used.

Polyvinyl alcohols, cellulose derivatives, and polycarboxylic acid resins may be mentioned as the above-mentioned thickener, for example. The mix amount of the thickener is preferably, 0.01 to 2 parts by weight of solids, and more preferably 0.05 to 1.5 parts by weight, and still more preferably 0.1 to 1 part by weight, relative to 100 parts by weight of solids of the emulsion for vibration damping materials.

Examples of the above-mentioned filler include inorganic fillers such as calcium carbonate, kaolin, silica, talc, barium sulfate, alumina, iron oxide, titanium oxide, glass powders, magnesium carbonate, aluminum hydroxide, talc, kieselguhr, and clay; flaky inorganic fillers such as glass flakes and mica; and filamentous inorganic fillers such as metal oxide whiskers, glass fibers. The mix amount of the inorganic filler is preferably 50 to 700 parts by weight, relative to 100 parts by weight of solids of the emulsion for vibration damping materials, and more preferably 100 to 550 parts by weight.

Organic or inorganic coloring agents such as titanium oxide, carbon black, red iron oxide, Hansa yellow, benzine yellow, copperphthalocyanineblue, and quinacridone red may be mentioned as the above-mentioned coloring agent, for example.

Inorganic dispersants such as sodium hexametaphosphate and sodium tripolyphosphate and organic dispersants such as polycarboxylic acid dispersants may be mentioned as the above-mentioned dispersant, for example.

Metal salts of phosphoric acid, metal salts of molybdic acid, and metal salts of boric acid may be mentioned as the above-mentioned antirust pigment.

Silicone antifoaming agents may be mentioned as the above-mentioned antifoaming agent, for example.

A foaming agent may be used as the above-mentioned other components. In this case, it is preferable that the above-mentioned vibration damping composition is dried by heating to form a vibration damping coating film, as mentioned below. If the above-mentioned emulsion for vibration damping materials further contains a foaming agent, the vibration damping material has a uniform foaming structure and becomes a thick film, and thereby sufficient thermal drying property or high vibration damping property is exhibited. Thus, the preferable embodiments of the present invention include a vibration damping composition containing the emulsion for vibration damping materials of the present invention and a foaming agent.

Such a vibration damping composition may contain other components, if necessary.

The above-mentioned foaming agent is not especially limited. Low-boiling hydrocarbon-containing thermal expansion microcapsules, organic foaming agents, and inorganic foaming agents are preferable, for example. One or two or more species of them may be used. Examples of the thermal expansion microcapsules include Matsumoto Microsphere F-30, F-50 (products of Matsumoto Yushi-Seiyaku Co., Ltd.); and EXPANCEL WU642, WU551, WU461, DU551, DU401 (product of Japan Expancel Co., Ltd.). Examples of the organic foaming agent include azodicarbonamide, azobisisobutyronitrile, N,N-dinitrosopentamethylenetetramine, p-toluenesulfonylhydrazine, p-oxybis(benzenesulfohydrazide), and N,N-dinitroso. Examples of the inorganic foaming agent include sodium bicarbonate, ammonium carbonate, and silicon hydride.

The mix amount of the above-mentioned foaming agent is preferably 0.5 to 5.0 parts by weight relative to 100 parts by weight of the emulsion for vibration damping materials, and more preferably 1.0 to 3.0 parts by weight.

It is also preferable that the above-mentioned vibration damping composition containing the emulsion for vibration damping materials and the foaming agent further contains an inorganic pigment, for example. Thereby, the above-mentioned thermal drying property and high vibration damping property can be sufficiently exhibited.

The above-mentioned inorganic pigment is not especially limited. One or two or more species of the above-mentioned inorganic coloring agents or inorganic antirust pigments may be used, for example.

The mix amount of the above-mentioned inorganic pigment is preferably 50 to 700 parts by weight, relative to 100 parts by weight of the emulsion for vibration damping materials, and more preferably 100 to 550 parts by weight, for example.

Polyvalent metal compounds may be used as the above-mentioned other components. In this case, the polyvalent metal compound improves the stability, dispersibility, thermal drying property of the vibration damping composition or the vibration damping property of the vibration damping material formed by the vibration damping composition. The polyvalent metal compounds are not especially limited. Examples of the polyvalent metal compounds include zinc oxide, zinc chloride, and zinc sulfate. One or two or more species of them may be used.

The form of the above-mentioned polyvalent metal compound is not especially limited, and may be in the form of a fine particle, an aqueous dispersion, an emulsified dispersion, or the like. Among them, the polyvalent metal compound is preferably used in the form of an aqueous dispersion or an emulsified dispersion, and more preferably in the form of an emulsified dispersion because the dispersibility in the vibration damping composition is improved. The use amount of the polyvalent metal compound is preferably 0.05 to 5.0 parts by weight, and more preferably 0.05 to 3.5 parts by weight, relative to 100 parts by weight of solids in the vibration damping composition.

The above-mentioned vibration damping composition is coated on a substrate and dried to give a coating film serving as a vibration damping material. The substrate is not especially limited. As the method of coating the substrate with the vibration damping composition, brush, spatula, air spray gun, airless spray gun, mortar gun, texture gun, and the like, may be used for coating.

The coating amount of the above-mentioned vibration damping composition may be appropriately determined depending on the intended application, expected performance, and the like. The vibration damping composition is preferably coated such that the coating film at the time of (after) drying has a face weight of 1.0 to 7.0 kg/m$^2$, and more preferably 2.0 to 6.0 kg/m$^2$. Use of the vibration damping composition of the present invention makes it possible to obtain a coating film which hardly generates expansion or cracks at the time of drying and hardly causes sagging on the vertical surface. The preferable embodiments of the present invention include a coating method of the vibration damping composition, wherein the vibration damping composition is coated so as to have a face weight of 2.0 to 6.0 kg/m$^2$ after drying, and dried. The preferable embodiments of the present invention also include a vibration damping material obtainable by the coating method of the vibration damping composition.

Regarding the conditions to be used in the case where the above-mentioned vibration damping composition is coated on the substrate and dried to form a coating film, either drying by heating or drying at atmospheric temperature may be adopted. However, from efficiency points of view, drying by heating is preferred and preferably employed because the vibration damping composition of the present invention has excellent thermal drying property. The temperature of the drying by heating is preferably 80 to 210°C, and more preferably 110 to 180°C, and still more preferably 120 to 170°C.

The application of the vibration damping composition essentially containing the emulsion for vibration damping materials of the present invention is not especially limited. The vibration damping composition can exhibit excellent thermal drying property, vibration damping property and the like, and therefore can be preferably used in such applications as rolling stock, ships, aircraft, electric machines, buildings and construction machines, in addition to as automotive cabin floor base.

The emulsion for vibration damping materials of the present invention has the above-mentioned configuration. The emulsion for vibration damping materials is particularly useful as a raw material used in vibration damping materials of various structures because it is excellent in vibration damping property in a wide temperature range, thermal drying property, and film-forming property at low temperatures, and it can sufficiently suppress sagging on the vertical surface of the vibration damping coating film.

BEST MODE FOR CARRYING OUT THE INVENTION

The present invention is described in more detail with reference to Examples below, but the present invention is not limited to only these Examples. The terms, "part(s)" and "%" represent "part (s) by weight" and "% by weight", respectively, unless otherwise specified.

The weight average molecular weight (Mw), the SP value, the glass transition temperature (Tg) , and the viscosity in the following Examples and the like were determined by the above-mentioned procedures, respectively.

The white turbidity of the film was determined by the following procedures;

The obtained emulsion was charged into a mold in 100.0 mm (length) x 50.0 mm (width) x 2.00 mm (height) and left for 10 minutes at a room temperature. Then, the emulsion was baked at 140°C to form a resin film. Thus-obtained resin film was visually observed for transparency.

Example 1

A polymerization container equipped with a stirrer, a reflux condenser, a thermometer, a nitrogen gas inlet pipe and a dropping funnel was filled with deionized water (76 parts). Then, under stirring in a nitrogen gas stream, the contents of the container were heated to an internal temperature of 70°C. The dropping funnel was filled with a monomer emulsion 1 composed of methyl methacrylate (54.4 parts), 2-ethylhexyl acrylate (44.6 parts), acrylic acid (1.0 part), t-dodecylmercaptan (0.4parts), previously adjusted 20% aqueous solution of polyoxyethylene alkyl ether sulfate (product of DAI-ICHI KOGYO SEIYAKU CO., LTD. , "Hitenol NF-08")(15 parts), and deionized water (10 parts).

The monomer emulsion 1 was added dropwise into the polymerization container adjusted to 70°C, and thereby the reaction was allowed to proceed. The temperature was raised to 80°C, and the monomer emulsion 1 was uniformly added dropwise into the container over 2 hours while keeping the internal temperature at 80°C. At the same time, 5% aqueous solution of potassium persulfate (7 parts) and 2% aqueous solution of sodium hydrogensulfite (17.5 parts) were uniformly added dropwise into the container over 2 hours. Through such dropwise addition, an emulsion forming a core part was formed. After completion of the dropwise addition, the reaction was continued for 1 hour at 75°C. Thereby, each of the monomer components was completely consumed.

Thus-obtained emulsion forming the core part was measured for weight average molecular weight and SP value. The glass transition temperature was determined based on the formulation of the monomers constituting the core part. Table 1 shows these results.

Then, in another dropping funnel, prepared was a monomer emulsion 2 composed of methyl methacrylate (36.3 parts), butyl acrylate (62.7 parts), acrylic acid (1.0 part), t-dodecylmercaptan (0.4 parts), previously adjusted 20% aqueous solution of polyoxyethylene alkyl ether sulfate (product of DAI-ICH KOGYO SEIYAKU CO., LTD., "Hitenol NF-08") (15 parts), and deionized water (10 parts).

The prepared monomer emulsion 2 was added dropwise into the emulsion forming the core part and thereby the reaction was allowed to proceed. The monomer emulsion 2 was added dropwise over 2 hours while keeping the internal temperature at 80°C. At the same time, 5% aqueous solution of potassium persulfate (7 parts) and 2% aqueous solution of sodiumhydrogensulfite (17.5 parts) were uniformly added dropwise into the mixture over 2 hours. Through such dropwise addition, a shell part was formed to obtain a core-shell type particle. After completion of the dropwise addition, the reaction was continued for 1 hour at 75°C. Thereby, each of the monomers was completely consumed. Then, the reaction solution was cooled at 25°C, and a proper amount of 25% ammonia water was added into the reaction solution. Thereby, an aqueous emulsion for vibration damping materials was obtained.

The obtained emulsion for vibration damping materials was determined for weight average molecular weight (the whole molecular weight), solids concentration, pH and viscosity. And the white turbidity of the film was evaluated by visual observation. The SP value of the shell part was determined, and the glass transition temperature was measured based on the formulation of the monomers constituting the shell part. Table 1 shows these results.

Examples 2 and 16

Emulsions for vibration damping materials were obtained in the same manner as in Example 1, except that the formulation of the monomer components used for forming the core part and the shell part was changed as shown in Table 1 or 2.

These emulsions for vibration damping materials were evaluated for various physical properties and the like, as performed in Example 1. Tables 1 and 2 show the results. Using the emulsion in Example 11, the face weight was measured. Table 5 shows the results.

Example 17

An emulsion for vibration damping materials was obtained in the same manner as in Example 1, except that the formulation of the monomer components used for forming the core part and the shell part was changed as shown in Table 2 and a foaming agent ("EXPANCEL WU642", product of Japan Fillite Co., Ltd.) 1. 5 parts was further added to 100 parts of the obtained emulsion containing the core-shell type particle.

This emulsion for vibration damping materials was evaluated for various physical properties and the like, as performed in Example 1. Table 2 shows results.

Examples 18 to 21

Emulsions for vibration damping materials were obtained in the same manner as in Example 1, except that the formulation of the monomer components used for forming the core part and the shell part was changed as shown in Table 2, and a foaming agent ("EXPANCELL WU642", product of Japan Fillite Co., Ltd.) 1.5 parts was further added to 100 parts of the obtained emulsion containing the core-shell type particle, and a cross-linking agent was further added to 100 parts of the obtained emulsion containing the core-shell type particle. Table 2 shows the kind and the use amount of the cross-linking agent.

These emulsions for vibration damping materials were evaluated for various physical properties and the like, as performed in Example 1. Table 2 shows the results.

Comparative Examples 1, 2, and 4

Emulsions for vibration damping materials were obtained in the same manner as in Example 1, except that the formulation of the monomer components used for forming the core part and the shell part was changed as shown in Table 3.

These emulsions for vibration damping materials were evaluated for various physical properties and the like, as performed in Example 1. Table 3 shows the results.

Comparative Example 3

An emulsion for vibration damping materials was obtained in the same manner as in Example 1, except that the formulation of the monomer components used for forming the core part was changed as shown in Table 3 and the shell part was not formed.

This emulsion for vibration damping materials was evaluated for various physical properties and the like, as performed in Example 1. Table 3 shows the results.

Comparative Example 5

An emulsion for vibration damping materials was obtained in the same manner as in Example 1, except that the formulation of the monomer components used for forming the core part was changed as shown in Table 3, and the shell part was not formed, and a foaming agent ("EXPANCEL WU642", product of Japan Fillite Co. , Ltd. ) 1.5 parts was further added to 100 parts of the obtained emulsion containing the core-shell type particle. This emulsion for vibration damping materials was evaluated for various physical properties and the like, as performed in Example 1. Table 3 shows the results.

[Table 1]

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Core part (A) (Part) | MMA | 54.4 | 15.0 | 0.0 | 8.0 | 11.6 | 11.6 | 11.6 | 11.6 | 11.6 | 21.3 |
| | St | - | 40.0 | 40.0 | 40.0 | 40.0 | 40.0 | 40.0 | 40.0 | 40.0 | 40.0 |
| | 2EHA | 44.6 | 44.0 | 36.3 | - | 22.5 | 22.5 | 22.5 | 22.5 | 22.5 | 22.5 |
| | B A | - | - | - | 51.0 | 24.9 | 24.9 | 24.9 | 24.9 | 24.9 | 15.2 |
| | BMA | - | - | 22.7 | - | - | - | - | - | - | - |
| | A A | 1.0 | 1.0 | 1.0 | 1.0 | 1.0 | 1.0 | 1.0 | 1.0 | 1.0 | 1.0 |
| | t-DM | 0.4 | 0.4 | 0.4 | 0.4 | 0.4 | 0.8 | 0.1 | 0.2 | 0.1 | 0.8 |
| | MAA | - | - | - | - | - | - | - | - | - | - |
| | AN | - | - | - | - | - | - | - | - | - | - |
| | M-AN | - | - | - | - | - | - | - | - | - | - |
| | Acrylamide | - | - | - | - | - | - | - | - | - | - |
| | Methacrylamide | - | - | - | - | - | - | - | - | - | - |
| | HEMA | - | - | - | - | - | - | - | - | - | - |
| | GMA | - | - | - | - | - | - | - | - | - | - |
| | Molecular weight (Mw) | 91000 | 52000 | 87000 | 53000 | 55000 | 25000 | 230000 | 170000 | 230000 | 25000 |
| | SP value | 9.62 | 9.06 | 9.02 | 9.27 | 9.16 | 9.16 | 9.16 | 9.16 | 9.16 | 9.17 |
| | M M A | 36.3 | 26.5 | 7.1 | 35.2 | 30.7 | 30.7 | 30.7 | 30.7 | 30.7 | 30.7 |
| | St | - | 10.0 | 0.0 | 10.0 | 10.0 | 10.0 | 10.0 | 10.0 | 10.0 | 10.0 |
| | 2EHA | - | - | - | 53.8 | 25.8 | 25.8 | 25.8 | 25.8 | 25.8 | 25.8 |
| | BA | 62.7 | 62.5 | - | - | 32.5 | 32.5 | 32.5 | 32.5 | 32.5 | 32.5 |
| | EA | - | - | 91.9 | - | - | - | - | - | - | - |

EP 1 930 388 A1

| | | Examples | | | | | | | | | |
|---|---|---|---|---|---|---|---|---|---|---|---|
| | | 1 | 2 | 3 | 4 | 5 | 6 | 7 | 8 | 9 | 10 |
| Shell part (B) (Part) | AA | 1.0 | 1.0 | 1.0 | 1.0 | 1.0 | 1.0 | 1.0 | 1.0 | 1.0 | 1.0 |
| | t-DM | 0.4 | 0.4 | 0.4 | 0.4 | 0.4 | 0.1 | 0.8 | 0.2 | 0.1 | 0.6 |
| | AN | - | - | - | - | - | - | - | - | - | - |
| | M-AN | - | - | - | - | - | - | - | - | - | - |
| | Acrylamide | - | - | - | - | - | - | - | - | - | - |
| | Methacrylamide | - | - | - | - | - | - | - | - | - | - |
| | HEMA | - | - | - | - | - | - | - | - | - | - |
| | GMA | - | - | - | - | - | - | - | - | - | - |
| | SP value | 9.86 | 9.69 | 10.2 | 9.4 | 9.55 | 9.55 | 9.55 | 9.55 | 9.55 | 9.55 |
| Foaming agent (part) (to emulsion 100 parts) | | - | - | - | - | - | - | - | - | - | - |
| The whole molecular weight (M w) | | 120000 | 67000 | 71000 | 65000 | 63000 | 190000 | 91000 | 205000 | 250000 | 41000 |
| TgA/TgB (°C) | | 0/-15 | 0/-15 | 0/-15 | 0/-15 | 0/-15 | 0/-15 | 0/-15 | 0/-15 | 0/-15 | 15/-15 |
| Ratio of WA/WB | | 50/50 | 50/50 | 50/50 | 50/50 | 50/50 | 50/50 | 50/50 | 50/50 | 50/50 | 50/50 |
| ΔSP (B-A) | | 0.24 | 0.63 | 1.18 | 0.13 | 0.39 | 0.39 | 0.39 | 0.39 | 0.39 | 0.38 |
| Emulsion properties | Solids (% by weight) | 55.0 | 55.0 | 55.0 | 55.0 | 55.0 | 55.0 | 55.0 | 55.0 | 55.0 | 55.0 |
| | pH | 7.7 | 7.7 | 7.9 | 7.7 | 7.7 | 7.7 | 7.7 | 7.7 | 7.7 | 7.6 |
| | Viscosity (mPa·s) | 250 | 200 | 200 | 200 | 200 | 200 | 210 | 200 | 170 | 210 |
| | Film turbidity | Transparent | Transparent | Transparent | Transparent | Transparent | Fluorescent | Fluorescent | Fluorescent | Slightly white | Transparent |

EP 1 930 388 A1

In Table 1, "WA/WB" represents a ratio of the core part to the shell part (%/%). "ΔSP(B-A)" represents a difference in SP value between the resin formulation of the sell part (B) and the resin formulation of the core part (A). If the ΔSP is small, the compatibility is relatively excellent. The compatibility is relatively poor if the ΔSP is large.

[Table 2]

| | | Examples 11 | 12 | 13 | 14 | 15 | 16 | 17 | 18 | 19 | 20 | 21 |
|---|---|---|---|---|---|---|---|---|---|---|---|---|
| Core part (A) (part) | MMA | 24.3 | 19.5 | 19.5 | 18.4 | 18.4 | 20.3 | 24.3 | 24.3 | 24.3 | 24.3 | — |
| | St | 40.0 | 40.0 | 40.0 | 40.0 | 40.0 | 40.0 | 40.0 | 40.0 | 40.0 | 40.0 | 40.0 |
| | 2EHA | 22.5 | 22.5 | 22.5 | 22.5 | 22.5 | 22.5 | 22.5 | 22.5 | 22.5 | 22.5 | 22.5 |
| | BA | 12.2 | 12.0 | 12.0 | 13.1 | 13.1 | 11.2 | 12.2 | 12.2 | 12.2 | 12.2 | — |
| | BMA | — | — | — | — | — | — | — | — | — | — | — |
| | AA | 1.0 | 1.0 | 1.0 | 1.0 | 1.0 | 1.0 | 1.0 | 1.0 | 1.0 | 1.0 | 1.0 |
| | t-DM | 0.8 | 0.8 | 0.8 | 0.8 | 0.8 | 0.8 | 0.8 | 0.8 | 0.8 | 0.8 | 0.8 |
| | MAA | — | — | — | — | — | — | — | — | — | — | — |
| | AN | — | 5.0 | — | — | — | — | — | — | — | — | — |
| | M-AN | — | — | 5.0 | — | — | — | — | — | — | — | — |
| | Acrylamide | — | — | — | 5.0 | — | — | — | — | — | — | — |
| | Methacrylamide | — | — | — | — | 5.0 | — | — | — | — | — | — |
| | HEMA | — | — | — | — | — | 5.0 | — | — | — | — | — |
| | GMA | — | — | — | — | — | — | — | — | — | — | — |
| | Molecular weight (Mw) | 25000 | 25000 | 21000 | 31000 | 24000 | 25000 | 25000 | 25000 | 25000 | 25000 | 25000 |
| | SP value | 8.42 | 9.17 | 9.17 | 9.13 | 9.13 | 9.32 | 9.17 | 9.17 | 9.17 | 8.42 | 8.42 |
| Shell part (B) (Part) | MMA | 27.4 | 22.5 | 22.5 | 21.5 | 21.5 | 23.2 | 27.4 | 27.4 | 27.4 | 27.4 | 1.4 |
| | St | 10.0 | 10.0 | 10.0 | 10.0 | 10.0 | 10.0 | 10.0 | 10.0 | 10.0 | 10.0 | — |
| | 2EHA | 29.2 | 29.0 | 29.0 | 30.0 | 30.0 | 28.3 | 29.2 | 29.2 | 29.2 | 29.2 | — |
| | BA | 32.5 | 32.5 | 32.5 | 32.5 | 32.5 | 32.5 | 32.5 | 32.5 | 32.5 | 32.5 | — |
| | EA | — | — | — | — | — | — | — | — | — | — | 97.6 |
| | AA | 1.0 | 1.0 | 1.0 | 1.0 | 1.0 | 1.0 | 1.0 | 1.0 | 1.0 | 1.0 | 1.0 |
| | t-DM | 0.6 | 0.6 | 0.6 | 0.6 | 0.6 | 0.6 | 0.6 | 0.6 | 0.6 | 0.6 | 0.6 |
| | AN | — | 5.0 | — | — | — | — | — | — | — | — | — |
| | M-AN | — | — | 5.0 | — | — | — | — | — | — | — | — |
| | Acrylamide | — | — | — | 5.0 | — | — | — | — | — | — | — |
| | Methacrylamide | — | — | — | — | 5.0 | — | — | — | — | — | — |
| | HEMA | — | — | — | — | — | 5.0 | — | — | — | — | — |
| | GMA | — | — | — | — | — | — | — | — | — | — | — |
| | SP value | 9.29 | 9.52 | 9.52 | 9.48 | 9.48 | 9.7 | 9.53 | 9.53 | 9.53 | 9.29 | 9.29 |
| Foaming agent (part) (to emulsion 100 parts) | | — | — | — | — | — | — | 1.5 | 1.5 | 1.5 | — | — |
| Cross-linking agent A (part) (to emulsion 100 parts) | | — | — | — | — | — | — | — | 2 | — | — | — |
| Cross-linking agent B (part) (to emulsion 100 parts) | | — | — | — | — | — | — | — | — | 7 | — | — |
| The whole molecular weight (Mw) | | 41000 | 39000 | 47000 | 43000 | 51000 | 52000 | 41000 | 41000 | 41000 | 42000 | 42000 |
| TgA/TgB (°C) | | 20/-20 | 20/-20 | 20/-20 | 20/-20 | 20/-20 | 20/-20 | 20/-20 | 20/-20 | 20/-20 | 20/-20 | 20/-20 |
| Ratio of WA/WB | | 50/50 | 50/50 | 50/50 | 50/50 | 50/50 | 50/50 | 50/50 | 50/50 | 50/50 | 40/60 | 50/50 |
| ΔSP (B-A) | | 0.87 | 0.35 | 0.35 | 0.35 | 0.35 | 0.38 | 0.36 | 0.36 | 0.36 | 0.87 | 1.41 |
| Emulsion properties | Solids (% by weight) | 55.0 | 55.0 | 55.0 | 55.0 | 55.0 | 55.0 | 55.0 | 55.0 | 55.0 | 55.0 | 55.0 |
| | pH | 7.7 | 7.7 | 7.7 | 7.7 | 7.7 | 7.6 | 7.7 | 7.7 | 7.7 | 7.3 | 7.3 |
| | Viscosity (mPa·s) | 270 | 290 | 300 | 190 | 200 | 210 | 270 | 270 | 270 | 350 | 350 |
| | Film turbidity | Transparent | Transparent | Transparent | Transparent | Transparent | Transparent | Transparent | Transparent | Transparent | Transparent | Transparent |

[Table 3]

| | | Comparative Examples | | | | | |
|---|---|---|---|---|---|---|---|
| | | 1 | 2 | 3 | 4 | 5 | 6 |
| Core part (A) (part) | MMA | 54.4 | 11.6 | 25.0 | 11.6 | 25.0 | 30.9 |
| | St | - | 40.0 | 23.7 | 40.0 | 23.7 | 40.0 |
| | 2EHA | 44.6 | 22.5 | 50.3 | 22.5 | 50.3 | 28.1 |
| | BA | - | 24.9 | - | 24.9 | - | - |
| | BMA | - | - | - | - | - | - |
| | AA | 1.0 | 1.0 | 1.0 | 1.0 | 1.0 | 1.0 |
| | t-DM | 0.0 | 0.0 | 0.4 | 1.4 | 0.4 | 0.8 |
| | MAA | - | - | - | - | - | - |
| | AN | - | - | - | - | - | - |
| | M-AN | - | - | - | - | - | - |
| | Acrylamide | - | - | - | - | - | - |
| | Methacrylamide | - | - | - | - | - | - |
| | HEMA | - | - | - | - | - | - |
| | GMA | 20 | - | - | - | - | - |
| | Molecular weight (Mw) | THF insoluble | 420000 | 56000 | 11000 | 58000 | 25000 |
| | SP value | 9.62 | 9.16 | 9.23 | 9.16 | 9.23 | 9.15 |
| Shell part (B) (part) | MMA | 36.3 | 30.7 | - | 30.7 | - | 14.3 |
| | St | - | 10.0 | - | 10.0 | - | 10.0 |
| | 2EHA | - | 25.8 | - | 25.8 | - | - |
| | BA | 62.7 | 32.5 | - | 32.5 | - | 74.7 |
| | EA | - | - | - | - | - | - |
| | AA | 1.0 | 1.0 | - | 1.0 | - | 1.0 |
| | t-DM | 0.0 | 0.0 | - | 1.2 | - | 0.6 |
| | AN | - | - | - | - | - | - |
| | M-AN | - | - | - | - | - | - |
| | Acrylamide | - | - | - | - | - | - |
| | Methacrylamide | - | - | - | - | - | - |
| | HEMA | - | - | - | - | - | - |
| | GMA | 20 | - | - | - | - | - |
| | SP value | 9.86 | 9.55 | - | 9.55 | - | 9.68 |
| Foaming agent (part) (to emulsion 100 parts) | | - | - | - | - | 1.5 | - |
| The whole molecular weight (Mw) | | THF insoluble | 560000 | - | 18000 | - | 42000 |
| TgA/TgB(°C) | | 0/-15 | 0/-15 | -10 | 0/-15 | -10 | -30/30 |
| Ratio of WA/WB | | 50/50 | 50/50 | 100 | 50/50 | 100 | 50/50 |

(continued)

| | | Comparative Examples | | | | | |
|---|---|---|---|---|---|---|---|
| | | 1 | 2 | 3 | 4 | 5 | 6 |
| ΔSP(B-A) | | 0.24 | 0.39 | - | 0.39 | - | 0.53 |
| Emulsion property | Solids (% by weight) | 55.0 | 55.0 | 55.0 | 55.0 | 55.0 | 55.0 |
| | pH | 7.7 7 | 7.7 | 7.5 | 7.7 | 7.5 | 7.7 |
| | Viscosity (mPa·s) | 240 | 250 | 450 | 250 | 450 | 420 |
| | Film turbidity | White turbid | White turbid | Transparent | Transparent | Transparent | White turbid |

Descriptions in Tables 1 to 3 are as follows.
MMA: methyl methacrylate
St: styrene
2EHA: 2-ethylhexyl acrylate
BA: butyl acrylate
EA: ethyl acrylate
AA: acrylic acid
t-DM: t-dodecylmercaptan
AN: acrylonitrile
M-AN: methacrylonitrile
HEMA: hydroxyethyl methacrylate
GMA: glycidyl methacrylate
Cross-linking agent A: EPOCROS WS-700 (tradename, product of
NIPPON SHOKUBAI CO., LTD.)
Cross-linking agent B: EPOCROS K-2030 (tradename, product of
NIPPON SHOKUBAN CO., LTD)
TgA/TgB (°C) : glass transition temperature (°C) of the core part (A)/glass transition temperature (°C) of the shell part (B) Ratio of WA/WB: ratio by weight (%/%) of the core part (A) to the shell part (B)
ΔSP (B-A) : value calculated by subtracting the SP value of the core part (A) from the SP value of the shell part (B)

As ΔSP (B-A) becomes small, the compatibility becomes relatively more excellent. On the other hand, the compatibility becomes relatively more poor as ΔSP (B-A) becomes larger.

"Vibration damping composition"

The emulsions for vibration damping material obtained in Examples 1 to 19 and Comparative Examples 1 to 5 were mixed as follows to form vibration damping compositions. The vibration damping compositions were evaluated for vibration damping property, film-forming property, and storage stability. The emulsion for vibration damping materials obtained in Example 1 to 19, or Comparative Example 1 to 5: 100 parts Calcium carbonate ("NN#200", product of NITTO FUNKA KOGYO K. K. , filler): 250 parts Dispersant ("DEMOL EP", product of Kao Corp., special polycarboxylic acid polymer surfactant): 1 part Thickener ("ACRYSET AT-2", product of NIPPON SHOKUBAI Co., Ltd., alkali soluble acrylic thickener): 2 parts Antifoaming agent ("NOPCO 8034L", product of SAN NOPCO Ltd., antifoaming agent, main component: hydrophobic silicon +mineral oil): 0.3 parts

"Vibration damping property"

The above-mentioned vibration damping composition was coated on a cold rolling steel plate (SPCC: 10 x 245 x 1.6 mm) such that the coating film after drying has a face weight of 4.0 kg/m$^2$. The coated composition was dried for 30 minutes at 150°C. Thereby, a vibration damping coating film was formed on the cold rolling steel plate. As the measurement of vibration damping property, the loss factor values (%) at 20°C, 40°C, and 60°C atmosphere were measured by resonance method (3dB method) using a cantilever method (product of ONO SOKKI CO., LTD. , loss factor value measurement system). Table 4 shows the results.
Using the composition in Example 11, the composition was coated such that the coating film after drying has a face weight of 1.0 to 7.5 kg/m$^2$. And then, the coating film was similarly measured for loss factor values. Table 5 shows the results.

"Film-forming property test"

The above-mentioned aqueous vibration damping composition was coated on a substrate (70 x 150 x 0.8 mm) of SPCC-SD (dull steel plate, product of Nippon Testpanel Co. , Ltd.) so as to have a wet thickness of 4.0 mm. The composition was left at 5°C, and then evaluated for peeling or crack in the following manner. Table 4 shows the results.
Using the composition in Example 11, the composition was coated such that the coating film after drying has a face weight of 1.0 to 7.5 kg/m$^2$. The coating film was similarly evaluated for peeling or cracks in the following manner. Table 5 shows the results.
Good: No particular
Average: Peeling or cracks are observed to some extent.
Poor: Peeling or cracks are observed in many portions.

"Thermal drying property test"

The above-mentioned aqueous vibration damping composition in Example 11 was applied on a substrate (70 x 150 x 0.8 mm) of SPCC-SD (dull steel plate, product of Nippon Testpanel Co., Ltd.) such that the coating film after drying has a face weight of 1.0 to 7.5 kg/m$^2$. Immediately, the composition was dried by heating for 30minutes at 150°C. The state of the coating film after drying was evaluated based on the following standard. Table 5 shows the results.
Good: The coating film is sufficiently cured (sufficiently dried)
Average: The coating film slightly dents by strong pressure of fingers (volatile contents remain slightly)
Poor: The coating film is soft (drying is insufficient)

"Storage stability test"

The above-mentioned aqueous vibration damping composition was charged into a container (polypropylene container) and stored under sealed conditions for 2 weeks at 40°C. Two weeks later, the temperature was lowered to a room temperature. The state of the composition was evaluated as follows. Table 4 shows the results.
Good: Fluidity (No thickening is observed)
Poor: Gelling (No fluidity)

[Table 4]

| | | Examples | | | | | | | | | | | | | | | | | | | | | Comparative Examples | | | | | |
|---|---|---|---|---|---|---|---|---|---|---|---|---|---|---|---|---|---|---|---|---|---|---|---|---|---|---|---|---|
| | | 1 | 2 | 3 | 4 | 5 | 6 | 7 | 8 | 9 | 10 | 11 | 12 | 13 | 14 | 15 | 16 | 17 | 18 | 19 | 20 | 21 | 1 | 2 | 3 | 4 | 5 | 6 |
| Vibration damping property (loss factor value %) | 20°C | 9.2 | 10.2 | 11.1 | 7.0 | 11.6 | 13.0 | 10.2 | 12.1 | 13.1 | 10.1 | 13.5 | 13.1 | 13.5 | 13.7 | 13.7 | 13.5 | 15.3 | 15.3 | 15.3 | 16.0 | 14.3 | 6.9 | 7.2 | 8.9 | 4.5 | 11.3 | 7.7 |
| | 40°C | 18.9 | 17.5 | 15.9 | 19.5 | 18.4 | 17.5 | 17.9 | 16.3 | 15.9 | 16.9 | 15.3 | 16.9 | 16.6 | 16.3 | 16.6 | 16.7 | 19.1 | 18.5 | 18.9 | 16.6 | 13.9 | 9.6 | 8.5 | 5.9 | 13.1 | 8.9 | 6.5 |
| | 60°C | 8.1 | 11.1 | 12.2 | 7.5 | 11.2 | 10.1 | 12.2 | 12.4 | 12.8 | 13.5 | 12.9 | 13.9 | 14.1 | 14.7 | 14.9 | 14.5 | 14.5 | 16.2 | 16.5 | 9.1 | 12.5 | 7.1 | 7.9 | 1.5 | 3.1 | 2.9 | 8.3 |
| Film-forming property | | Good | Good | Good | Good | Good | Good | Good | Good | Good | Good | Good | Good | Good | Good | Good | Good | Good | Good | Good | Good | Good | Poor | Average | Good | Good | Good | Good |
| Storage stability (40°C) | | Good | Good | Good | Good | Good | Good | Good | Good | Good | Good | Good | Good | Good | Good | Good | Good | Good | Good | Good | Good | Good | Good | Good | Good | Poor (gelation) | Good | Good |

[Table 5]

| | | Face weight (kg/m$^2$) | | | | |
|---|---|---|---|---|---|---|
| | | 1.0 | 2.0 | 4.0 | 6.0 | 7.5 |
| Vibration damping property loss factor value %) | 20°C | 0.8 | 2 | 13.5 | 23.3 | 15.1 |
| | 40°C | 2 | 6 | 15.3 | 26.1 | 13.5 |
| | 60°C | 0.4 | 3 | 12.9 | 20.1 | 9.5 |
| Thermal drying property | | Good | Good | Good | Average | Poor |
| Film-forming proprty | | Good | Good | Good | Good | Average |

**Claims**

1.  An emulsion for vibration damping materials, comprising a particle having: a core part formed from an acrylic copolymer (A) ; and a shell part formed from an acrylic copolymer (B),
    wherein one of the acrylic copolymer (A) and the particle having the core part and the shell part has a weight average molecular weight of 20000 to 250000.

2.  The emulsion for vibration damping materials according to Claim 1,
    wherein a glass transition temperature (TgA) of the acrylic copolymer (A) or a glass transition temperature (TgB) of the acrylic copolymer (B) is 0°C or more, and a difference between the TgA and the TgB is 15°C or more.

3.  The emulsion for vibration damping materials according to Claim 1 or 2,
    wherein a ratio by weight of the acrylic copolymer (A) to the acrylic copolymer (B) is 10 to 70/30 to 90.

4.  The emulsion for vibration damping materials according to any of Claims 1 to 3,
    wherein each of the acrylic copolymer (A) and the acrylic polymer (B) is prepared by copolymerizing a monomer component containing a monomer having a polar functional group.

5.  The emulsion for vibration damping materials according to any of Claims 1 to 4,
    wherein the polar functional group is at least one functional group selected from the group consisting of a carboxyl group, a hydroxyl group, a nitrile group, and an amide group.

6.  A production method of the emulsion for vibration damping materials of any of Claims 1 to 5,
    wherein an emulsion polymerization step using monomer components having different glass transition temperatures is performed in multiple stages.

7.  The production method of the emulsion for vibration damping materials according to Claim 6,
    wherein an emulsion polymerization step using a monomer component constituting the core part formed from the acrylic copolymer (A) is performed prior to an emulsion polymerization step using a monomer component constituting the shell part formed from the acrylic copolymer (B)

8.  A vibration damping composition comprising the emulsion for vibration damping materials of any of Claims 1 to 5.

9.  A use method of the emulsion for vibration damping materials,
    wherein the vibration damping composition of Claim 8 is used as an aqueous vibration damping material.

10. A coating method of the vibration damping composition of Claim 8,
    wherein the vibration damping composition is coated so as to have a face weight of 2.0 to 6.0 kg/m$^2$ after drying, and dried.

11. A vibration damping material obtainable by the coating method of the vibration damping composition of Claim 10.

## INTERNATIONAL SEARCH REPORT

| | International application No. |
|---|---|
| | PCT/JP2006/316428 |

A. CLASSIFICATION OF SUBJECT MATTER
*C09K3/00*(2006.01)i, *C08F2/22*(2006.01)i, *C08F265/06*(2006.01)i, *F16F15/02*
(2006.01)i

According to International Patent Classification (IPC) or to both national classification and IPC

B. FIELDS SEARCHED

Minimum documentation searched (classification system followed by classification symbols)
C09K3/00, C08F2/22, C08F265/06, F16F15/02, C09D133/00-133/26

Documentation searched other than minimum documentation to the extent that such documents are included in the fields searched
Jitsuyo Shinan Koho          1922-1996    Jitsuyo Shinan Toroku Koho    1996-2006
Kokai Jitsuyo Shinan Koho    1971-2006    Toroku Jitsuyo Shinan Koho    1994-2006

Electronic data base consulted during the international search (name of data base and, where practicable, search terms used)

C. DOCUMENTS CONSIDERED TO BE RELEVANT

| Category* | Citation of document, with indication, where appropriate, of the relevant passages | Relevant to claim No. |
|---|---|---|
| Y | JP 10-316866 A  (Mitsui Chemicals, Inc.),<br>02 December, 1998 (02.12.98),<br>Full text; particularly, Claims 1 to 2;<br>Par. Nos. [0001], [0026], [0048] to [0064]<br>(Family: none) | 1-11 |
| Y | JP 2005-126645 A  (Asahi Gomu Kabushiki Kaisha),<br>19 May, 2005 (19.05.05),<br>Full text; all drawings; particularly, Claim 1;<br>Par. No. [0013]<br>(Family: none) | 1-11 |

☒ Further documents are listed in the continuation of Box C.          ☐ See patent family annex.

| * | Special categories of cited documents: | "T" | later document published after the international filing date or priority date and not in conflict with the application but cited to understand the principle or theory underlying the invention |
|---|---|---|---|
| "A" | document defining the general state of the art which is not considered   to be of particular relevance | | |
| "E" | earlier application or patent but published on or after the international filing date | "X" | document of particular relevance; the claimed invention cannot be considered novel or cannot be considered to involve an inventive step when the document is taken alone |
| "L" | document which may throw doubts on priority claim(s) or which is cited to establish the publication date of another citation or other special reason (as specified) | "Y" | document of particular relevance; the claimed invention cannot be considered to involve an inventive step when the document is combined with one or more other such documents, such combination being obvious to a person skilled in the art |
| "O" | document referring to an oral disclosure, use, exhibition or other means | | |
| "P" | document published prior to the international filing date but later than the priority date claimed | "&" | document member of the same patent family |

| Date of the actual completion of the international search | Date of mailing of the international search report |
|---|---|
| 24 November, 2006 (24.11.06) | 05 December, 2006 (05.12.06) |

| Name and mailing address of the ISA/ | Authorized officer |
|---|---|
| Japanese Patent Office | |
| Facsimile No. | Telephone No. |

Form PCT/ISA/210 (second sheet) (April 2005)

22

<div align="center">

**INTERNATIONAL SEARCH REPORT**

</div>

International application No.

PCT/JP2006/316428

C (Continuation).   DOCUMENTS CONSIDERED TO BE RELEVANT

| Category* | Citation of document, with indication, where appropriate, of the relevant passages | Relevant to claim No. |
|---|---|---|
| Y | JP 2000-86939 A  (Nippon Tokushu Toryo Kabushiki Kaisha),<br>28 March, 2000 (28.03.00),<br>Full text; particularly, Claims 1 to 2;<br>Par. Nos. [0013], [0020] to [0025]<br>(Family: none) | 1-11 |
| Y | JP 2004-115665 A  (Nippon Shokubai Co., Ltd.),<br>15 April, 2004 (15.04.04),<br>Full text; particularly, Claims 1 to 2;<br>Par. No. [0026]<br>(Family: none) | 1-11 |
| A | JP 5-148446 A  (Nippon Carbide Industries Co., Ltd.),<br>15 June, 1993 (15.06.93),<br>& CA 2065100 A1          & EP 0507634 A1<br>& US 5356956 A | 1-11 |

Form PCT/ISA/210 (continuation of second sheet) (April 2005)

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- JP 2001152028 A
- JP 2005105133 A